# EUROPÄISCHE PATENTSCHRIFT

(11) **EP 1 720 763 B1**
(45) Veröffentlichungstag und Bekanntmachung des Hinweises auf die Patenterteilung: **01.12.2010**
(21) Anmeldenummer: 05701575.2
(22) Anmeldetag: 20.01.2005
(51) Int. Cl.: B63G 8/08

(54) **ENERGIEVERSORGUNGSEINRICHTUNG FÜR EIN U-BOOT**
POWER SUPPLY DEVICE FOR A SUBMERSIBLE VESSEL
DISPOSITIF D'ALIMENTATION EN ENERGIE POUR UN SOUS-MARIN

(30) Priorität: 29.01.2004 DE 102004004625
(43) Veröffentlichungstag der Anmeldung: 15.11.2006
(73) Patentinhaber: SIEMENS AKTIENGESELLSCHAFT, 80333 München (DE); HOWALDTSWERKE-DEUTSCHE WERFT AG, 24143 Kiel (DE)
(72) Erfinder: AHLF, Gerd, 91369 Wiesenthau (DE); EDER, Manfred, 91352 Schlammersdorf (DE); LERSCH, Josef, 91336 Heroldsbach (DE); IWERS, Jens, Uwe, 23568 Lübeck (DE); HARTUNG, Werner, 23568 Lübeck (DE)
(86) Internationale Anmeldenummer: PCT/EP2005/050247
(87) Internationale Veröffentlichungsnummer: WO 2005/073077

(56) Entgegenhaltungen:
- GB-A- 1 141 642
- SATTLER G: "Fuel cells going on-board" JOURNAL OF POWER SOURCES, ELSEVIER SEQUOIA S.A. LAUSANNE, CH, vol. 86, no. 1-2, March 2000 (2000-03), pages 61-67, XP004194100 ISSN: 0378-7753
- 1971, THE SOCIETY OF NAVAL ARCHITECTS AND MARINE ENGINEERS , NEW YORK, USA , XP002326746 page 620, left-hand column, paragraph 4

## Beschreibung

Die Erfindung betrifft eine Energieversorgungseinrichtung für ein U-Boot mit zumindest einem elektrischen Propellermotor, einem Batteriesatz,' einem Ladegenerator mit Antrieb und einem Energieversorgungssystem mit Stromschienen sowie Schalt- und Automatisierungseinrichtungen, wobei die Energieversorgungseinrichtung eine H₂O₂-Brennstoffzelleneinrichtung aufweist.

Das Dokument "Fuel Cells going on board", aus den "Journal of Power Sources", März 2000, der als nächstliegenden Stand der Technik angesehen wird, beschreibt eine Brennstoffzelleneinrichtung de obengenannte Gattung.

Energieversorgungseinrichtungen für U-Boote mit den vorstehend genannten Aggregaten sind bekannt, und es ist Aufgabe der Erfindung, die bekannte Energieversorgungseinrichtung derart auszugestalten, dass sie in prinzipiell gleicher Ausführung nicht nur in neue U-Boote eingebaut werden kann, sondern dass sie insbesondere für die Nachrüstung von älteren Schnorchel-U-Booten, z.B. vom Typ 209, geeignet ist. Die älteren Schnorchel-U-Boote sollen durch die Nachrüstung, die bereits vor einiger Zeit, siehe die Druckschrift der Siemens AG "Electrical Systems for Submarines" von 2001, vorgeschlagen wurde, eine höhere Reichweite bei Unterwasserfahrt erreichen. Dabei ist zu berücksichtigen, dass sich die elektrische Leistung, die an Bord der nachgerüsteten U-Boote installiert ist, gegenüber der ursprünglichen deutlich erhöht, insbesondere wenn naheliegend gleichzeitig mit der Nachrüstung mit einer Brennstoffzelleneinrichtung auch die Batteriesätze erneuert werden. Die neuen Batterien haben in der Regel eine deutlich höhere Leistung als die ursprünglich installierten Batterien.

Insgesamt muss die Elektroanlage aufgabengemäß so ausgestaltet werden, dass sie für die höhere Einspeisung an Elektroenergie in die Fahranlage des U-Bootes und die brennstoffzellenspezifischen Eigenheiten geeignet ist. Es ist dabei zu berücksichtigen, dass die Nachrüstung mit einer Brennstoffzelleneinrichtung, wie in der genannten Druckschrift erwähnt, so geschieht, dass der Rumpf des älteren U-Boots um eine sogenannte AIP-(Air Independent Propulsion) Scheibe ergänzt wird. In dieser befindet sich die Brennstoffzelleneinrichtung und die zu ihr gehörigen Control- und Schalteinrichtungen sowie die notwendigen Hilfseinrichtungen etc..

Die Aufgabe wird im wesentlichen dadurch gelöst, dass die Brennstoffzelleneinrichtung mit den Stromschienen zur Versorgung des Propellermotors mit Elektroenergie über einen in Abhängigkeit von dem Spannungsniveau der Brennstoffzelleneinrichtung betätigten Leistungsschalter verbunden ist.

Die einfachste Lösung für die Nachrüstung oder auch für die Erstausrüstung eines U-Boots mit einer Brennstoffzelleneinrichtung wäre es, diese mit den Stromschienen zur Versorgung des Propellermotors mit Elektroenergie direkt zu verbinden, da die Brennstoffzelleneinrichtung für sich ein- und ausschaltbar ist und somit direkt auf die Stromschienen zur Versorgung des Propellermotors mit Elektroenergie aufgeschaltet werden könnte. Dies würde den Forderungen nach einer besonders Platz sparenden und einfachen Aufschaltung der Brennstoffzelleneinrichtung auf das Energieversorgungssystem eines U-Boots entsprechen. Erfindungsgemäß wird jedoch zwischen Brennstoffzelleneinrichtung und den Stromschienen, die mit dem Propellermotor verbunden sind, ein Leistungsschalter angeordnet, der abhängig von dem Spannungsniveau der Brennstoffzelleneinrichtung betätigt werden kann. So ergibt sich eine besonders vorteilhafte Aufschaltungsmöglichkeit der Brennstoffzelleneinrichtung, die es ermöglicht, die Brennstoffzellen besonders gut einzuschalten, zu testen etc. So kann den besonderen Betriebsanforderungen einer Brennstoffzelleneinrichtung für U-Boote entsprochen werden.

In Ausgestaltung der Erfindung ist vorgesehen, dass die Energieversorgungseinrichtung einen Leistungsschalter aufweist, der als zweipoliger Leistungsschalter für mindestens 1000 Ampere ausgebildet ist. So ergibt sich ein vorteilhaft kostengünstiger, einfacher Leistungsschalter, der die erforderliche Betriebssicherheit für eine Brennstoffzelleneinrichtung an Bord von U-Booten sicherstellt.

In anderer Ausgestaltung der Erfindung ist vorgesehen, dass der Leistungsschalter ein dreipoliger Leistungsschalter für streufeldarmen Aufbau ist, wobei in beiden Fällen der Leistungsschalter die Brennstoffzelleneinrichtung direkt mit den Stromschienen der Energieversorgungseinrichtung verbindet. Ein dreipoliger Leistungsschalter ist schon deutlich aufwendiger als ein zweipoliger Leistungsschalter, er hat aber den besonderen Vorteil, dass sein Aufbau eine streufeldarme Energieübertragung erlaubt. So ergibt sich in dieser Ausbildung eine besonders vorteilhafte Energieversorgung des U-Boots über die Brennstoffzellenanlage, die hohen Anforderungen an die Sicherheit gegen Ortung Rechnung trägt.

In Ausgestaltung der Erfindung ist weiterhin vorgesehen, dass zwischen der Brennstoffzelleneinrichtung und dem Leistungsschalter im Bedarfsfall noch ein DC-DC-Steller anordenbar ist. Mit der Anordnung eines DC-DC-Stellers zwischen der Brennstoffzelleneinrichtung und dem Leistungsschalter ist ein Betrieb der Brennstoffzelle in einem besonders günstigen Spannungsbereich möglich, ohne dass das Spannungsniveau der Stromschienen diesem entsprechen muss. Es ergibt sich also für den Betrieb der Brennstoffzelleneinrichtung eine besonders günstige Variabilität. Die Brennstoffzelle kann also auch im Teillastbetrieb auf die Stromschienen aufgeschaltet werden. Auch bei einem Ausfall von mehr als einem Modul, wenn die Brennstoffzelleneinrichtung aus mehreren, z.B. 8 Modulen, besteht, die in Reihe geschaltet sind, kann das Spannungsniveau für die auf die Stromschienen übergebene Energie gehalten werden.

In Ausgestaltung der Erfindung ist weiterhin vorgesehen, dass die Brennstoffzelleneinrichtung mit einem Ein- und Ausschaltmodus betrieben wird. So kann ein jeweils optimales Anfahren und Abstellen der Brennstoffzelleneinrichtung erfolgen, insbesondere wenn der Leistungsschalter, wie vorteilhaft vorgesehen, in Abhängigkeit von einem brennstoffzelleneinrichtungsspezifischen Ein- und Ausschaltmodus betätigt wird. Dies erhöht die Betriebssicherheit und die Lebensdauer sowie die Zahl der Ein- und Ausschaltvorgänge, die die Brennstoffzelleneinrichtung absolvieren kann, erheblich. Die Brennstoffzellenmodule sind sowohl für den Betrieb als auch zu Test-und Prüfzwecken mit einer Reihe von automatisierungstechnischen Komponenten versehen, z.B. Sensoren, Pumpen und fernbetätigten Ventilen für Wasserstoff, Sauerstoff, Kühlwasser, Stickstoff, Vakuum und Deionat.

Des weiteren sind für den Betrieb und das Schalten der Brennstoffzellenmodule weitere betriebstechnische Komponenten enthalten, wie Druckminderer, Wärmetauscher, Gastanks etc., und zwar auch hier sowohl für den Betrieb als auch für Test- und Prüfzwecke. So ergibt sich eine Brennstoffzelleneinrichtung, die "im Stand" voll in Betrieb genommen und getestet werden kann, wobei die Ein- und Ausschaltmodi ebenfalls getestet werden können. Insgesamt ergibt sich also eine Brennstoffzelleneinrichtung, die als "Stand alone"-Einrichtung ebenso wie die Batteriesätze gebraucht werden können und bedarfsweise auf die Stromschienen zur Versorgung des elektrischen Propellermotors mit Elektroenergie aufgeschaltet werden.

Es versteht sich, dass die Brennstoffzelleneinrichtung ebenso wie z.B. die Batteriesätze, gegen Schäden durch Kurzschlüsse im Bordnetz geschützt werden müssen. Zu diesem Zweck ist vorgesehen, dass im Parallelzweig der Brennstoffzelleneinrichtung bzw. des üblichen Ladeanschlusses eine Sollschmelzstelle angeordnet ist, die in Reihe zu den Leistungsschaltern geschaltet wird. So ist ein besonderer Schutz der Brennstoffzellenanlage, die ja einen sehr hohen Wert darstellt, gewährleistet. Der Wert besteht nicht nur darin, dass die Brennstoffzelleneinrichtung dem U-Boot eine lange Tauchzeit und eine große Fahrstrecke unter Wasser verschafft, sondern dass tatsächlich auch die sehr hohen Kosten einer Reparatur oder eventuell sogar Neuerstellung vermieden werden können.

Es existierte bereits seit längerem die Idee, Boote mit Brennstoffzellen auszurüsten. Diese Idee kam bereits auf, als die ersten Raumfahrzeuge mit Brennstoffzellen, damals noch mit Carbonatzellen, ausgerüstet wurden. Da die Energieversorgungseinrichtungen für U-Boote jedoch von Energieversorgungseinrichtungen von Raumfahrzeugen ganz erheblich abweichen, wurde die Idee trotz ausführlicher Tests lange Zeit nicht verwirklicht. Die Realisierung der Idee ist durch die Erfindung besonders sicher möglich. Dies gilt nicht nur für die Neuausrüstung von U-Booten, sondern auch für die Nachrüstung von U-Booten, wo sie eine besondere wirtschaftliche Bedeutung erhält.

Bei Abschaltung von Kurzschlüssen mit Leistungsschaltern (LS) oder bei sehr hohen Kurzschlussströmen durch LS in Verbindung mit Sollschmelzstellen (SSS) ergeben sich zwangsläufig Spannungseinbrüche im Netz, die zu Betriebsstörungen führen können. Die störenden Spannungseinbrüche können durch Einsatz eines HTS-Strombegrenzers nahezu vermieden werden. Ebenfalls ergeben sich durch die schnelle Strombegrenzung erheblich geringere mechanische und thermische Belastungen der Schaltanlagen.

Von besonderem Vorteil ist im Rahmen der Erfindung, wenn die Energieversorgungseinrichtung des U-Boots im Rahmen der Ausrüstung oder Nachrüstung mit Brennstoffzelleneinrichtungen auch einen mit einem Leistungsschalter zusammen wirkenden HTS-Strombegrenzer aufweist, der mit einer kryogenen Flüssigkeit gekühlt wird. Ein derartiger Strombegrenzer arbeitet nahezu ohne Verzögerung. Er stellt die optimale Sicherung einer Brennstoffzellenanlage dar und ist deshalb besonders vorteilhaft für die erfindungsgemäße Energieversorgungseinrichtung. Die physikalischen Grundlagen eines HTS-Strombegrenzers sind bereits des Längeren bekannt, nunmehr haben die HTS-Strombegrenzer jedoch eine Reife erreicht, die es erlaubt, sie mit flüssigem Stickstoff zu kühlen. Der flüssige Stickstoff kann vorteilhaft durch einen Verdichter aus dem in der Luft befindlichen Stickstoff hergestellt werden, es ist aber auch eine Mitnahme von flüssigem Stickstoff an Bord des U-Boots möglich. Hierzu weist das U-Boot vorteilhaft einen Vorratsbehälter für kryogene Flüssigkeit, insbesondere für flüssigen Stickstoff auf, der insbesondere durch ein elektrisches Aggregat gekühlt wird.

Es ist dabei für ein U-Boot, welches eine Brennstoffzelleneinrichtung an Bord hat, besonders günstig, wenn der HTS-Strombegrenzer mit einem Vorratsbehälter verbunden ist, dessen Verdampfungswärme zum Aufheizen des flüssigen Sauerstoffs, der für den Betrieb der Brennstoffzelleneinrichtung vorgesehen ist, benutzt wird. Von besonderem Vorteil ist dabei, wenn der HTS-Strombegrenzer und der Vorratsbehälter in demselben Segment wie die Energieversorgungsanlage angeordnet sind. Insbesondere bei einer Anordnung des HTS-Strombegrenzers in der z.B. nachgerüsteten AIP-Scheibe ergibt sich ein Nachrüstungssegment für das U-Boot, das in optimaler Weise die nachzurüstenden Energieversorgungskomponenten enthält, so dass diese nicht in dem ursprünglichen Bootskörper, der ja bis zum letzten Winkel ausgenutzt ist, angeordnet werden müssen.

Jeder HTS-Strombegrenzer hat im supraleitenden Zustand einen nicht messbaren, vernachlässigbar kleinen elektrischen Widerstand. Im Falle eines Stromes, der oberhalb des Bemessungsstroms liegt, steigt der elektrische Widerstand des HTS-Strombegrenzers sprungartig an, bis sein supraleitender Zustand in seinen normalleitenden Zustand überwechselt. Der HTS-Strombegrenzer bzw. dessen Supraleiter nimmt dann einen endlichen Widerstand an, bis er wieder zurückgekühlt wird.

In einem Stromnetz wird der HTS-Strombegrenzer - wie in den vorstehend beschriebenen Ausführungsbeispielen - in Verbindung mit einem galvanisch trennenden Element mit Ausschaltvermögen eingesetzt. Auch der Einsatz von Lastschaltern ist möglich. Das galvanisch trennende Element wird automatisch angesteuert. Hierzu wird die Spannungsdifferenz benutzt, die sich im normalleitenden Zustand zwischen Ein- und Ausgangsseite des HTS-Strombegrenzers einstellt. Das Wiedereinschalten des galvanisch trennenden Elements erfolgt von Hand, wenn der Kurzschluss beseitigt ist.

Die Erfindung wird anhand von Zeichnungen näher erläutert, aus denen, ebenso wie aus den Unteransprüchen, weitere erfindungswesentliche Einzelheiten entnehmbar sind.

Im einzelnen zeigen:
- FIGUR 1: die Prinzipschaltung einer U-Boot-Fahranlage mit einer Brennstoffzelleneinrichtung,
- FIGUR 2: die Prinzipschaltung einer U-Boot-Fahranlage mit einer Brennstoffzelleneinrichtung, die nach- gerüstet worden ist,
- FIGUR 3: das Prinzipschaltbild eines zweipoligen Leistungs- schalters,
- FIGUR 4: das Prinzipschaltbild eines dreipoligen Leistungs- Schalters und
- FIGUR 5: das Prinzip eines HTS-Strombegrenzersystems.

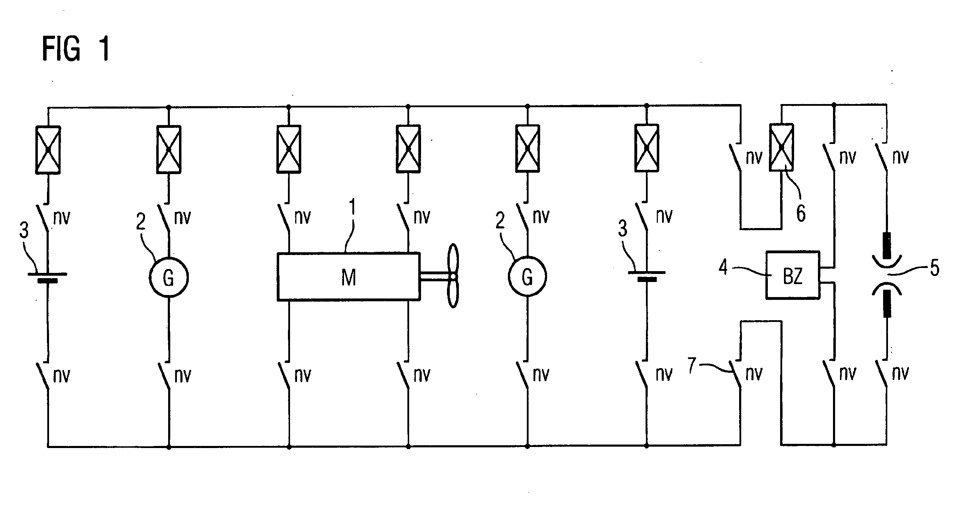

In FIGUR 1 ist mit 1 der Fahrmotor des U-Boots bezeichnet, hierbei kann es sich um einen DC-Motor oder um einen DCgespeisten Motor handeln. 2 bezeichnet die Generatoren, die in der Regel durch Dieselmotoren angetrieben werden und die in der Schnorchel-Phase die Batteriesätze 3 aufladen. 4 bezeichnet die Brennstoffzelleneinrichtung und 5 den allgemeinen Ladeanschluss. Mit 6 ist beispielhaft eine Sollschmelzstelle bezeichnet und mit 7 ein Leistungsschalter, wobei die Leistungsschalter nicht verzögert (nv) oder zeitverzögert (zv) ansprechen können. 6 und 7 sind durch Symbole gekennzeichnet, die sich in der Zeichnung wiederholen, dabei ist die Anordnung der Leistungsschalter und Sollschmelzstellen beispielhaft. Da es sich um eine Prinzipschaltung handelt, bedeutet die Darstellung nicht, dass die einzelnen Komponenten entsprechend in dem U-Boot angeordnet sind, vielmehr werden sie dort den räumlichen Verhältnissen angepasst verteilt. So ist z.B. der Fahrmotor mit seinem Propeller stets im Heck angeordnet, dies spielt aber für die Prinzipschaltung keine Rolle.

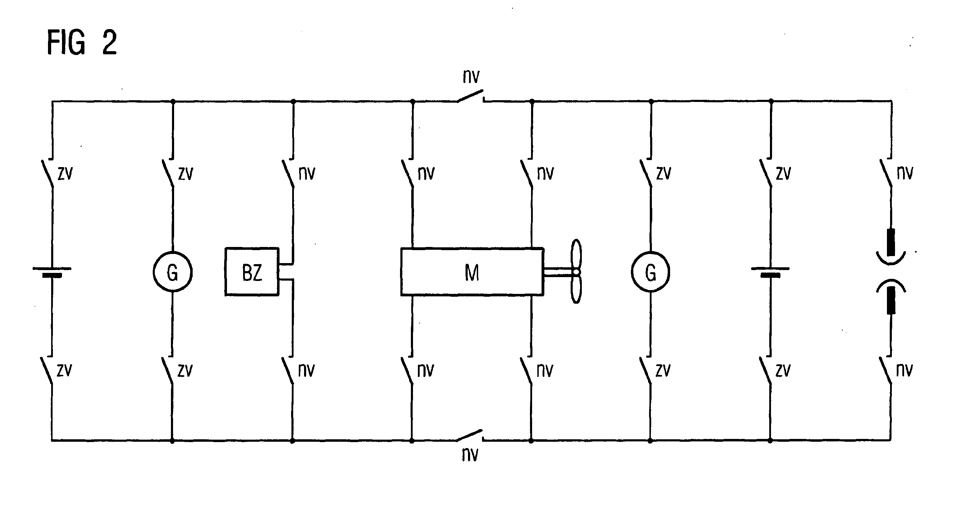

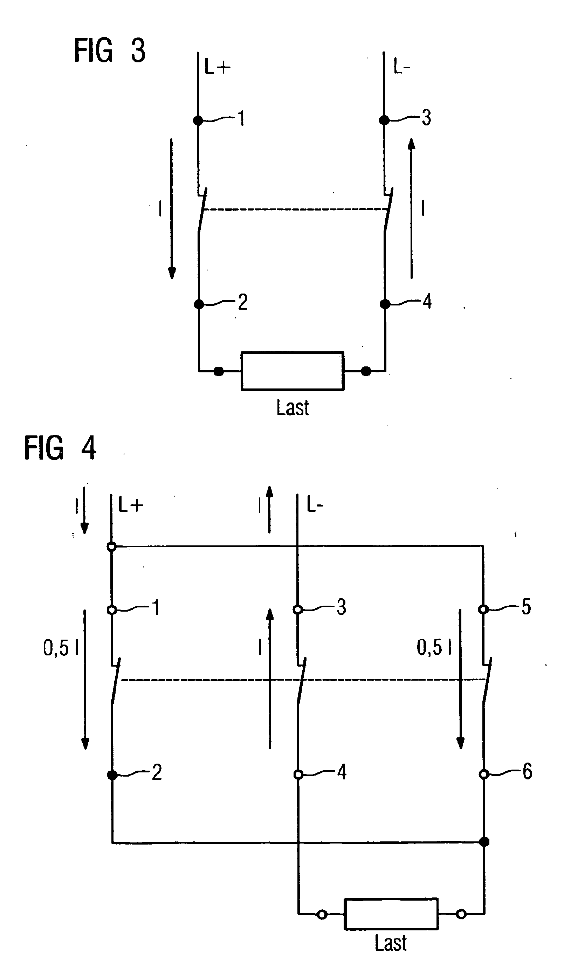

In FIGUR 2, die die Prinzipschaltung einer Fahranlage eines U-Boots zeigt, wie sie beispielsweise bei neuen U-Booten verwendet wird, sind die gleichen Komponenten wie in FIGUR 1 mit den gleichen Symbolen gekennzeichnet. So ist die Prinzipschaltung für den Fachmann ohne weiteres verständlich, desgleichen sind auch FIGUR 3 und FIGUR 4 ohne weiteres für den Fachmann verständlich, da sie in der Elektrotechnik allgemein übliche Symbole verwenden, so dass sich eine gesonderte Beschreibung mit Bezugszeichen erübrigt.

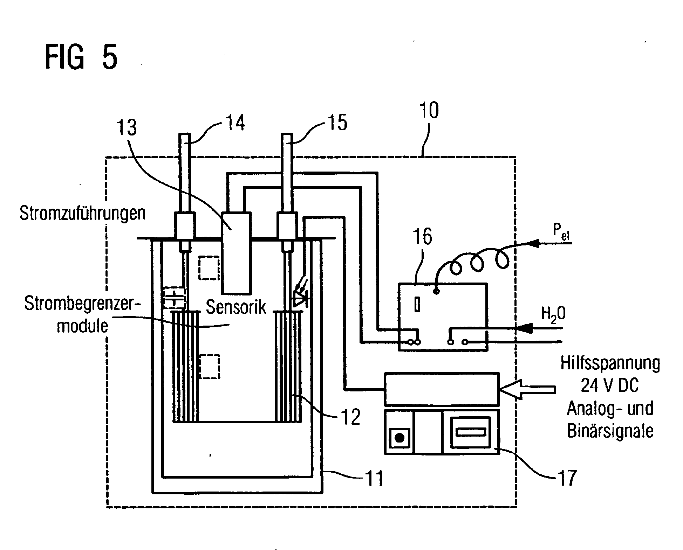

In FIGUR 5 ist das Prinzip eines HTS-Strombegrenzer-Systems gezeigt, dessen Einsatz in modernen U-Booten ebenso wie der Einsatz von Brennstoffzelleneinrichtungen - wie bereits in der vorstehenden Beschreibung ausgeführt - von besonderem Vorteil ist. Das Strombegrenzersystem ist mit 10 bezeichnet und in dem Strombegrenzersystem 10 befindet sich ein Kryostat 11 mit Strombegrenzermodulen 12, die in der Regel mit Platten ausgerüstet sind, auf denen sich mäanderförmige HTS-Leiter befinden. Diese sind im Betriebstemperaturzustand ohne Widerstand leitend, wenn eine vorher bestimmbare Stromdichte überschritten wird, verlieren sie die Supraleitfähigkeit und dann ergibt sich ein nicht leitender Zustand. Da dies aufgrund physikalischer Vorgänge erfolgt, erfolgt das Erreichen des nicht leitenden Zustandes praktisch verzögerungsfrei. So wird ein Lichtbogen im Entstehen unterdrückt.

Die Kühlung der Strombegrenzermodule erfolgt durch eine Kryoflüssigkeit, vorteilhaft flüssiger Stickstoff, es kann aber auch flüssiges Neon verwendet werden. Die Kryoflüssigkeit wird durch den Kaltkopf 13 laufend auf dem niedrigen Temperaturniveau gehalten wird, das die Supraleitfähigkeit der mäanderförmigen Leiter auf den Platten der Strombegrenzermodule ermöglicht.

Über die Sammelschienen 14, 15 wird der Strom zu- und abgeführt, so dass sich eine mit einem Leistungsschalter vergleichbare Montierbarkeit und Demontierbarkeit des HTS-Strombegrenzers ergibt. Die Temperatur im Kryostaten kann entweder über den Kaltkopf, aber auch über Verdampfung des Kältemittels, erreicht werden. Dann muss natürlich jederzeit der Volumenverlust des Kältemittels durch Nachfüllen ausgeglichen werden. In einer besonders günstigen Ausführung wird die Kühlung des Kaltkopfs durch einen Verdichter 16 vorgenommen, der wassergekühlt ist. In einer Einheit 17 wird der Kaltkopf gesteuert und geregelt, desgleichen der Verdichter. Da der HTS-Strombegrenzer keine Schaltcharakteristik aufweist, arbeitet er vorteilhaft zusammen mit einem Leistungsschalter in Reihe, der nach einem Ansprechen des Strombegrenzers und die Abschaltung des durch den Strombegrenzer fließenden Stroms den Stromkreis öffnet, so dass eine einwandfreie Wiederaufnahme der Arbeit des Strombegrenzers nach Beseitigung der Ansprechursache möglich ist. Insofern arbeitet der Strombegrenzer vorteilhaft mit einem Leistungsschalter zusammen, so dass sich ein sicheres Energieerzeugungs- und Schaltsystem an Bord des U-Boots ergibt, das bei Unterwasserfahrt einen Betrieb auch bei Gefechtseinwirkungen ermöglicht, ohne dass erhebliche Spannungseinbrüche und starke Lichtbogengeräusche entstehen.

## Patentansprüche

1. Energieversorgungseinrichtung für ein U-Boot mit zumindest einem E-Propellermotor, einem Batteriesatz, einem Ladegenerator mit Antrieb und einem Energieversorgungssystem mit Stromschienen sowie Schalt- und Automatisierungseinrichtungen, wobei die Energieversorgungseinrichtung eine aus einzelnen Modulen bestehende H₂O₂-Brennstoffzelleneinrichtung aufweist, die mit den Stromschienen - zur Versorgung des Propellermotors mit Elektroenergie - über eine in Abhängigkeit von dem Spannungsniveau der Brennstoffzelleneinrichtung betätigten Leistungsschalter verbunden ist, wobei der Leistungsschalter die Brennstoffzelleneinrichtung direkt mit der Energieversorgungseinrichtung verbindet und wobei die Energieversorgungseinrichtung aus Kurzschlussschutzgründen im Parallelzweig der Brennstoffzelleneinrichtung bzw. des Ladeanschlusses eine Sollschmelzstelle aufweist.

2. Energieversorgungseinrichtung nach Anspruch 1,
**dadurch gekennzeichnet , dass** der Leistungsschalter zumindest ein zweipoliger Leistungsschalter für mindestens 1000 A ist.

3. Energieversorgungseinrichtung nach Anspruch 1,
**dadurch gekennzeichnet , dass** der Leistungsschalter, vorzugsweise ein dreipoliger Leistungsschalter, für streufeldarmen Aufbau ist.

4. Energieversorgungseinrichtung nach Anspruch 1, 2 oder 3,
**dadurch gekennzeichnet, dass** zwischen der Brennstoffzelleneinrichtung und dem Leistungsschalter im Bedarfsfall noch ein DC-DC-Steller anordenbar ist.

5. Energieversorgungseinrichtung nach einem oder mehreren der vorhergehenden Ansprüche,
**dadurch gekennzeichnet , dass** die Brennstoffzelleneinrichtung mit einem Ein- und Ausschaltmodus betrieben wird.

6. Energieversorgungseinrichtung nach einem oder mehreren der vorhergehenden Ansprüche,
**dadurch gekennzeichnet , dass** der Leistungsschalter in Abhängigkeit eines brennstoffzellenspezifischen und ggf. bei Nutzung als Batterieladeeinrichtung batteriespezifischen Ein- und Ausschaltmodus betätigt wird.

7. Energieversorgungseinrichtung nach einem oder mehreren der vorhergehenden Ansprüche,
**dadurch gekennzeichnet, dass** in Reihe zu den Leistungsschaltern der Brennstoffzelleneinrichtung bzw. des Ladeanschlusses eine Sollschmelzstelle angeordnet ist.

8. Energieversorgungseinrichtung nach einem oder mehreren der vorhergehenden Ansprüche,
**dadurch gekennzeichnet , dass** sie für den Betrieb und die Ein- und Ausschaltung der Brennstoffzellenmodule weitere automatisierungstechnische Komponenten enthält, wie Sensoren, Pumpen und fernbetätigte Ventile für Wasserstoff, Sauerstoff, Kühlwasser, Stickstoff, Vakuum und Deionad.

9. Energieversorgungseinrichtung nach einem oder mehreren der vorhergehenden Ansprüche,
**dadurch gekennzeichnet, dass** sie zu Test- und Prüfzwecken der Brennstoffzelleneinrichtung weitere automatisierungstechnische Komponenten enthält, wie Sensoren, Pumpen und fernbetätigte Ventile für Wasserstoff, Sauerstoff, Kühlwasser, Stickstoff, Vakuum und Deionad.

10. Energieversorgungseinrichtung nach einem oder mehreren der vorhergehenden Ansprüche,
**dadurch gekennzeichnet, dass** sie für den Betrieb und die Ein- und Ausschaltung der Brennstoffzellenmodule weitere betriebstechnische Komponenten enthält, wie Druckminderer, Wärmetauscher, Gastanks, etc.

11. Energieversorgungseinrichtung nach einem oder mehreren der vorhergehenden Ansprüche,
**dadurch gekennzeichnet, dass** sie zu Test- und Prüfzwecken der Brennstoffzelleneinrichtung weitere betriebstechnische Komponenten enthält, wie Druckminderer, Wärmetauscher, Gastanks, etc.

12. Energieversorgungseinrichtung nach einem oder mehreren der vorhergehenden Ansprüche,
**dadurch gekennzeichnet , dass** sie zur Nachrüstung von konventionellen U-Booten verwendet wird.

13. Energieversorgungseinrichtung nach einem oder mehreren der vorhergehenden Ansprüche, insbesondere nach Anspruch 12,
**dadurch gekennzeichnet, dass** sie zumindest einen mit einem Leistungsschalter zusammenwirkenden HTS-Strombegrenzer aufweist, der mit einer kryogenen Flüssigkeit gekühlt wird.

14. Energieversorgungseinrichtung nach Anspruch 13,
**dadurch gekennzeichnet , dass** der HTS-Strombegrenzer mit einem Vorratsbehälter für kryogene Flüssigkeit verbunden ist, der insbesondere durch ein elektrisches Aggregat gekühlt wird.

15. Energieversorgungseinrichtung nach Anspruch 13 oder 14,
**dadurch gekennzeichnet , dass** der HTS-Strombegrenzer mit einem Vorratsbehälter verbunden ist, dessen Verdampfungswärme zum Aufheizen des flüssigen Sauerstoffs genutzt wird, der zum Betrieb der Brennstoffzelleneinrichtung benötigt wird.

16. Energieversorgungseinrichtung nach Anspruch 13, 14 oder 15, **dadurch gekennzeichnet , dass** der HTS-Strombegrenzer und der Vorratsbehälter in demselben Segment wie die Energieversorgungsanlage angeordnet sind.

## Claims

1. Power supply device for a submarine having at least one electrical propeller motor, one battery set, one charging generator with a drive and one power supply system with busbars as well as switching and automation devices, with the power supply device having an H₂O₂ fuel cell device which comprises individual modules and is connected to the busbars - in order to supply electrical power to the propeller motor - via a circuit breaker which is operated as a function of the voltage level of the fuel cell device in which the circuit breaker connects the fuel cell device directly to the power supply device, and in which the power supply device has a fuse link in the parallel path of the fuel cell device and the charging path, respectively, for short-circuit protection reasons.

2. Power supply device according to Claim 1,
**characterized in that** the circuit breaker is at least one two-pole circuit breaker for at least 1000 A.

3. Power supply device according to Claim 1,
**characterized in that** the circuit breaker, preferably a three-pole circuit breaker, is designed for low stray fields.

4. Power supply device according to Claim 1, 2, or 3,
**characterized in that** a DC/DC controller can also be arranged between the fuel cell device and the circuit breaker, if required.

5. Power supply device according to one or more of the preceding claims,
**characterized in that** the fuel cell device is operated with an on and off switching mode.

6. Power supply device according to one or more of the preceding claims,
**characterized in that** the circuit breaker is operated as a function of an on and off switching mode which is specific for the fuel cell and is battery-specific when used as a battery charging device.

7. Power supply device according to one or more of the preceding claims,
**characterized in that** a fuse link is arranged in series with the circuit breakers of the fuel cell device and the charging path, respectively.

8. Power supply device according to one or more of the preceding claims,
**characterized in that** the power supply device contains further automation components for operation and for on and off switching of the fuel cell modules, such as sensors, pumps and remotely-operated valves for hydrogen, oxygen, cooling water, nitrogen, vacuum and demineralized water.

9. Power supply device according to one or more of the preceding claims,
**characterized in that** the power supply device contains further automation components for test purposes
for the fuel cell device, such as sensors, pumps and remotely-operated valves for hydrogen, oxygen, cooling water, nitrogen, vacuum and demineralized water.

10. Power supply device according to one or more of the preceding claims,
**characterized in that** the power supply device contains further operating components for operation and for on and off switching of the fuel cell modules, such as pressure reducers, heat exchangers, gas tanks, etc.

11. Power supply device according to one or more of the preceding claims,
**characterized in that** the power supply device contains further operating components for test purposes for the fuel cell device, such as pressure reducers, heat exchangers, gas tanks, etc.

12. Power supply device according to one or more of the preceding claims,
**characterized in that** the power supply device is used for retrofitting conventional submarines.

13. Power supply device according to one or more of the preceding claims, in particular according to Claim 12, **characterized in that** the power supply device has at least one HTS current limiter which interacts with a circuit breaker and is cooled with a cryogenic liquid.

14. Power supply device according to Claim 12,
**characterized in that** the HTS current limiter is connected to a supply container for cryogenic liquid, which is cooled in particular by electrical equipment.

15. Power supply device according to Claim 13 or 14,
**characterized in that** the HTS current limiter is connected to a supply container, whose vaporization heat is used to heat the liquid oxygen which is required for operation of the fuel cell device.

16. Power supply device according to Claim 13, 14 or 15,
**characterized in that** the HTS current limiter and the supply container are arranged in the same segment as the power supply installation.

## Revendications

1. Dispositif d'alimentation en énergie d'un sous-marin ayant au moins un moteur d'hélice électrique, une batterie d'accumulateurs, un générateur de charge ayant un entraînement et un système d'alimentation en énergie ayant des barres de courant, ainsi que des dispositifs de commutation et d'automatisation, le dispositif d'alimentation en énergie comportant un dispositif de piles à combustible H2O2, qui est constitué de modules individuels et qui est relié aux barres de courant, pour l'alimentation du moteur de l'hélice en énergie électrique par un disjoncteur actionné en fonction du niveau de tension du dispositif de piles à combustible, le disjoncteur reliant le dispositif de piles à combustible directement au dispositif d'alimentation en énergie et le dispositif d'alimentation en énergie ayant, pour des raisons de protection vis-à-vis d'un court-circuit, un point fusible de consigne dans la branche en parallèle du dispositif de piles à combustible ou de la borne de charge, respectivement.

2. Dispositif d'alimentation en énergie suivant la revendication 1,
**caractérisé en ce que** le disjoncteur est au moins un disjoncteur bipolaire pour au moins 1000 A.

3. Dispositif d'alimentation en énergie suivant la revendication 1,
**caractérisé en ce que** le disjoncteur est, de préférence, un disjoncteur tripolaire pour une structure ayant peu de champ de dispersion.

4. Dispositif d'alimentation en énergie suivant la revendication 1, 2 ou 3,
**caractérisé en ce qu'**un convertisseur courant continu courant continu peut être monté encore en cas de besoin entre le dispositif de piles à combustible et le disjoncteur.

5. Dispositif d'alimentation en énergie suivant l'une ou plusieurs des revendications précédentes,
**caractérisé en ce que** le dispositif de piles à combustible fonctionne avec un mode en circuit et un mode hors circuit.

6. Dispositif d'alimentation en énergie suivant l'une ou plusieurs des revendications précédentes,
**caractérisé en ce que** le disjoncteur fonctionne en fonction d'un mode en circuit et hors circuit spécifique aux piles à combustible et, dans le cas d'utilisation d'un dispositif de charge à accumulateur, spécifique aux accumulateurs.

7. Dispositif d'alimentation en énergie suivant l'une ou plusieurs des revendications précédentes,
**caractérisé en ce qu'**un point fusible de consigne est monté en série avec les disjoncteurs du dispositif de piles à combustible ou de la borne de charge, respectivement.

8. Dispositif d'alimentation en énergie suivant l'une ou plusieurs des revendications précédentes,
**caractérisé en ce qu'**il comporte, pour le fonctionnement et la mise en circuit et hors circuit des modules de piles à combustible, d'autres composants de technique d'automatisation, comme des capteurs, des pompes et des vannes télécommandées, pour de l'hydrogène, de l'oxygène, de l'eau de refroidissement, de l'azote, le vide et de l'eau déminéralisée.

9. Dispositif d'alimentation en énergie suivant l'une ou plusieurs des revendications précédentes,
**caractérisé en ce qu'**il comporte, à des fins de test et de contrôle du dispositif de piles à combustible, d'autres composants de technique d'automatisation, comme des capteurs, des pompes et des vannes télécommandées pour de l'hydrogène, de l'oxygène, de l'eau de refroidissement, de l'azote, le vide et de l'eau déminéralisée.

10. Dispositif d'alimentation en énergie suivant l'une ou plusieurs des revendications précédentes,
**caractérisé en ce qu'**il comporte, pour le fonctionnement et la mise en circuit et hors circuit des modules de piles à combustible, d'autres composants de technique de fonctionnement, comme des abaisseurs de pression, des échangeurs de chaleur, des cuves à gaz, etc.

11. Dispositif d'alimentation en énergie suivant l'une ou plusieurs des revendications précédentes,
**caractérisé en ce qu'**il comporte, à des fins de test et de contrôle du dispositif de piles à combustible, d'autres composants de technique de fonctionnement, comme des abaisseurs de pression, des échangeurs de chaleur, des cuves à gaz, etc.

12. Dispositif d'alimentation en énergie suivant l'une ou plusieurs des revendications précédentes,
**caractérisé en ce qu'**il est utilisé pour le rééquipement de sous-marins classiques.

13. Dispositif d'alimentation en énergie suivant l'une ou plusieurs des revendications précédentes, notamment suivant la revendication 12,
**caractérisé en ce qu'**il comporte au moins un limiteur de courant HTS coopérant avec un disjoncteur et refroidi par un liquide cryogénique.

14. Dispositif d'alimentation en énergie suivant la revendication 13,
**caractérisé en ce** le limiteur de courant HTS communique avec un réservoir de liquide cryogénique, qui est refroidi notamment par un groupe électrique.

15. Dispositif d'alimentation en énergie suivant la revendication 13 ou 14,
**caractérisé en ce que** le limiteur de courant HTS communique avec un réservoir, dont la chaleur d'évaporation est utilisée pour chauffer l'oxygène liquide, dont on a besoin pour faire fonctionner le dispositif de piles à combustible.

16. Dispositif d'alimentation en énergie suivant la revendication 13, 14 ou 15,
**caractérisé en ce que** limiteur de courant HTS et le réservoir sont disposés dans le même segment que l'installation d'alimentation en énergie.
